# EUROPÄISCHE PATENTSCHRIFT

(11) **EP 2 532 500 B1**
(45) Veröffentlichungstag und Bekanntmachung des Hinweises auf die Patenterteilung: **05.03.2014**
(21) Anmeldenummer: 11168921.2
(22) Anmeldetag: 07.06.2011
(51) Int. Cl.: B28B 7/28, B28B 1/26, B28B 7/30

(54) **Verfahren und Vorrichtung zur Herstellung von Keramikartikeln**
Method and apparatus for manufacturing ceramic items
Procédé et dispositif de fabrication d'articles en céramique

(43) Veröffentlichungstag der Anmeldung: 12.12.2012
(73) Patentinhaber: Geberit International AG, 8645 Jona (CH)
(72) Erfinder: Inglin, Urs, 8853 Lachen (CH); Schwendener, Peter, 8833 Samstagern (CH); Harsch, Margit, 8856 Tuggen (CH)
(74) Vertreter: Frischknecht, Harry Ralph

(56) Entgegenhaltungen:
- JP-A- 9 164 513
- JP-A- 2001 342 671
- JP-U- H0 469 108
- US-A- 3 812 229

## Beschreibung

### TECHNISCHES GEBIET

Die vorliegende Erfindung betrifft ein Verfahren zur Herstellung von Keramikartikeln, insbesondere Sanitärartikeln, nach dem Oberbegriff von Anspruch 1 und eine dazugehörige Vorrichtung nach Anspruch 7.

### STAND DER TECHNIK

Aus dem Stand der Technik sind Sanitärartikel, wie beispielsweise ein Spülbecken oder eine Wasserklosettschüssel bekannt. Typischerweise werden solche Sanitärartikel durch das Giessen von Porzellanmasse bzw. Schlicker unter Druck in eine Gussform und durch anschliessendes Aushärten in der Gussform hergestellt. Nach erfolgter Aushärtung wird der Sanitärartikel entformt, das heisst aus der Gussform entnommen. Bei der Entformung wird die Gussform an definierten Trennstellen getrennt und die einzelnen Gussformteile voneinander wegbewegt, so dass der Sanitärartikel aus der Gussform entnommen werden kann.

Nach dem Entformen muss der Sanitärartikel vielfach mechanisch weiterverarbeitet werden, weil nicht alle Elemente am Sanitärartikel direkt mit der Gussform herstellbar sind. Beispielsweise sind hier Öffnungen zu nennen, welche vielfach derart am Sanitärartikel angeordnet sind, dass diese nicht mit der Gussform herzustellen sind, weil dann ein späteres Entformen aufgrund der Form dieser Elemente nicht mehr möglich ist. Hierfür setzt der Fachmann üblicherweise ein Bohrwerkzeug ein, um die Öffnungen zu bohren. Gerade bei komplexen Formen ist es aber auch nicht immer möglich, derartige Bohrungen an jeder Stelle am Sanitärartikel vorzunehmen.

JP 2001 392 671 und JP 40469108 U zeigen die Verwendung von Schieben zur Formung von Öffnung mit einem Verfahren gemäß dem Oberbegriff des Anspruchs 1 und einer Vorrichtung gemäß dem Oberbegriff des Anspruchs 7.

Zusammenfassend kann gesagt werden, dass diese Nachbearbeitung kostspielig ist und auch technisch nicht immer umsetzbar ist, gerade dann nicht, wenn beispielsweise eine Öffnung an einem durch einen Bohrer nicht zugänglichen Ort geschaffen werden soll.

Weiter sind aus dem Stand der Technik, beispielsweise aus der US 3,218,376 Stopfen bekannt, welche der Keramikgiesser in die Gussform einlegt. Der Einsatz eines solchen Stopfens hat sich als vorteilhaft erwiesen, wenn verhältnismässig grosse Öffnungen geformt werden sollen. Bei Öffnungen mit einem kleinen Querschnitt im Bereich von wenigen Millimetern hingegen, kann die gewünschte Genauigkeit mit derartigen Stopfen aber nicht mehr erreicht werden.

### DARSTELLUNG DER ERFINDUNG

Ausgehend von diesem Stand der Technik liegt der Erfindung die Aufgabe zugrunde, ein Verfahren anzugeben, welches die Nachteile des Standes der Technik überwindet. Insbesondere soll ein Verfahren angegeben werden, welches die Formung von Öffnungen, insbesondere an schlecht zugänglichen Stellen, an keramischen Sanitärartikeln erlaubt.

Eine solche Aufgabe löst ein Verfahren zur Herstellung eines Sanitärartikels nach Anspruch 1. Demgemäss umfasst ein Verfahren zur Herstellung eines Sanitärartikels, wie einer Klosettschüssel, den Schritt des Einbringens von Schlicker in den Gussraum einer Gussform, den Schritt des Aushärtens des Schlickers im Gussraum und den Schritt des Trennens der Gussform zur Entnahme des ausgehärteten Sanitärartikels aus der Gussform. Vor dem Schritt des Einbringens des Schlickers wird mindestens ein Schieber, vorzugsweise eine Vielzahl von Schiebern, von ausserhalb des Gussraums mindestens teilweise in den Gussraum entlang einer Einschubrichtung eingebracht, wobei der Schieber vor oder während dem Schritt des Trennens der Gussform aus dem Gussraum entgegen der Einschubrichtung entfernt wird, wobei durch den Schieber eine Öffnung, eine Einbuchtung oder ein Durchbruch im Sanitärartikel bereitstellbar ist. Mehrere Schieber stehen über ein Aktuatorelement mit einander in Verbindung und werden gemeinsam betätigt.

Aufgrund der Anordnung des Schiebers können Öffnungen, Einbuchtungen oder Durchbrüche in einfacher Art und Weise hergestellt werden. Aufgrund des Rückzuges des Schiebers vor oder während dem Schritt des Entformens, können auch Öffnungen, Einbuchtungen oder Durchbrüche, welche an Stellen liegen, die ein Entformen nicht zulassen, geformt werden.

Vorzugsweise wird der Schieber entlang eines fest in der Gussform angeordneten und über eine Innenwand in den Gussraum mündenden Kanals verschoben, wobei der Kanal mindestens einen Umlenkabschnitt umfasst, welcher den Kanal bezüglich der Innenwand umlenkt, wobei der Schieber flexibel ausgebildet ist, so dass der Schieber während der Bewegung umgelenkt wird. Die Umlenkung bezüglich der Innenwand, dessen Form der Aussenwand des Sanitärartikels entspricht, hat den Vorteil, dass durch die Umlenkung der Schieber an schlecht zugängliche Stellen geführt werden kann. Folglich können Hindernisse oder Platzprobleme aufgrund der Geometrie des herzustellenden Sanitärartikels durch einen solchen Umlenkabschnitt umgangen werden.

Der Umlenkabschnitt ist bevorzugt bogenförmig als Bogenabschnitt ausgebildet, wobei der Bogenabschnitt über einen Zuführabschnitt, der bevorzugt winklig zur Innenwand verläuft, in Verbindung steht, und wobei der Bogenabschnitt gegenüber des Zuführabschnittes mit einem Endabschnitt, welcher direkt oder indirekt in den Gussraum mündet, in Verbindung steht.

Vorzugsweise mündet der Kanal in einer vorbestimmten Richtung, bevorzugt im wesentlichen parallel, zur Innenwand des Gussraums in den Gussraum, so dass der Schieber im in den Gussraum einragenden Zustand über sein freies Ende parallel zur Innenwand in der Gussform liegt. Die vorbestimmte Richtung kann für jeden Schieber individuell festgelegt werden, so dass jede Öffnung die vorteilhafteste Richtung aufweist.

Vorzugsweise ragt der Schieber mit einem freien Ende in den Gussraum, insbesondere in einen Hohlgussabschnitt, ein. Das freie Ende weist vorzugsweise eine Länge von der Innenwand des Gussraums auf, welche grösser ist, als die Dicke des Sanitärartikels in dem Bereich, so dass eine Öffnung durch den Sanitärartikel 1 hindurch bereitgestellt werden kann.

Vorzugsweise wird beim Schritt des Einbringens des Schlickers ein Vollgussabschnitt und ein Hohlgussabschnitt befüllt, wobei der Hohlgussabschnitt mit Druckluft beaufschlagt wird, so dass der Schlicker an die Innenwand des Gussraums gepresst wird, wobei der Schieber nach erfolgter Beaufschlagung aus dem Gussraum entgegen der Einschubrichtung entfernt wird.

Eine nach dem Verfahren hergestellte Toilettenschüssel umfasst einen Flansch, eine sich dem Flansch anschliessende umlaufend ausgebildete Seitenwand und ein sich der Seitenwand anschliessenden Anschlussrohr mit einem Siphonabschnitt, wobei die Klosettschüssel im Bereich der Seitenwand eine Vielzahl von Öffnungen aufweist, welche durch den Schieber bereitstellbar sind.

Eine Vorrichtung zur Durchführung des oben beschriebenen Verfahrens umfasst eine Gussform mit einem Gussraum und weiter mindestens einen Schieber, welcher entlang einer Einschubrichtung von ausserhalb des Gussraums mindestens teilweise in den Gussraum einschiebbar ist und vor dem Schritt des Trennens der Gussform aus der Gussform entgegen der Einschubrichtung aus dem Gussraum entfernbar ist, wobei durch den Schieber eine Öffnung, eine Einbuchtung oder ein Durchbruch im Sanitärartikel bereitstellbar ist. Mehrere Schieber sind über ein Aktuatorelement miteinander verbunden.

Der Schieber ist vorzugsweise entlang eines fest in der Gussform angeordneten und über eine Innenwand in den Gussraum mündenden Kanals verschiebbar, wobei der Kanal mindestens einen Umlenkabschnitt umfasst, welcher den Kanal bezüglich der Innenwand umlenkt, so dass der Schieber während der Bewegung umgelenkt wird.

Der Kanal weist die Gestalt eines in der Gussform eingelassenen Rohres auf, wobei im Innenraum des Rohres der Schieber bewegbar ist, und wobei das Rohr abschnittsweise gebogen bzw. gekrümmt ausgebildet ist, so dass der Umlenkabschnitt bereitstellbar ist. Die Stirnseite des Rohres ist bevorzugt bündig mit der Innenwand des Gussraums. Alternativ ist die Stirnseite des Rohres von der Innenwand des Gussraums versetzt angeordnet, wobei sich der Kanal aus dem Rohr und einem sich dem Rohr anschliessenden Durchgang, welcher Teil der Gussform ist, zusammensetzt.

Das freie Ende des Schieber weist eine derartige Steifigkeit aufweist, dass der Schieber beim Einbringen des Schlickers seine Lage aufrechterhält, wobei der Schieber vorzugsweise aus Kunststoff, insbesondere Nylon, und/oder Metall ist. Der Schieber selbst weist eine Flexibilität auf, welche das Bewegen des Schiebers durch den Umlenkabschnitt erlaubt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Schnittansicht einer Klosettschüssel, welche mit dem Verfahren und einer Vorrichtung gemäss der vorliegenden Erfindung herstellbar ist;
- Fig. 2: eine schematische Schnittansicht einer Gussform im geschlossenen Zustand, in welcher ein Sanitärartikel, insbesondere eine Klosettschüssel nach Figur 1, herstellbar ist;
- Fig. 3: eine Detailansicht von Figur 2;
- Fig. 4: eine Ansicht der Gussform von oben.

### BESCHREIBUNG BEVORZUGTER AUSFÜHRUNGSFORMEN

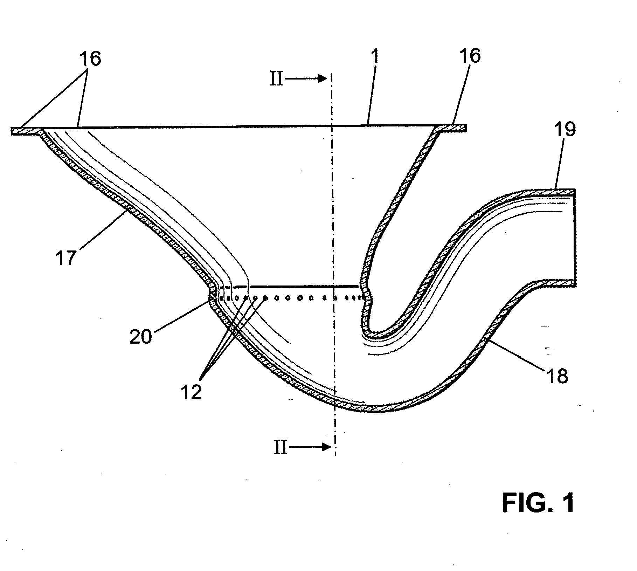

In der Figur 1 wird ein Sanitärartikel 1 aus Keramik, hier eine Klosettschüssel, gezeigt. Die Klosettschüssel umfasst eine Sitzfläche 16, eine sich der Sitzfläche oder Flansch 16 anschliessenden umlaufend ausgebildete Seitenwand 17, einen sich der Seitenwand 17 anschliessenden Siphonabschnitt 18, welcher hier in ein Anschlussrohr 19 mündet. Im Bereich der Seitenwand 17 umfasst die Klosettschüssel 1 weiter einen um die Seitenwand 17 umlaufenden Wulstabschnitt 20, in welchem hier eine Vielzahl von Öffnungen 12 angeordnet sind. Die Öffnungen 12 sind dabei so orientiert, dass deren Mittelachsen möglichst tangential zur Seitenwand 17 verlaufen. Dadurch können durch die Öffnungen eine Vielzahl von Wasserstrahlen bereitgestellt werden, welche eine Reinigungswirkung auf die Klosettsschüssel 1 im Bereich des Siphons 18 haben. Die Bereitstellung von derartigen Öffnungen durch eine nachträgliche Bearbeitung, wie durch einen Bohrvorgang ist technisch nicht umsetzbar, weil des Bohrwerkzeug aufgrund der Ausbildung der Seitenwand nicht im gewünschten Winkel an die Stelle geführt werden kann, an welcher die Öffnungen 12 anzuordnen sind. Auch vom Siphon 18 her ist eine Formung der Öffnungen 12 nicht möglich.

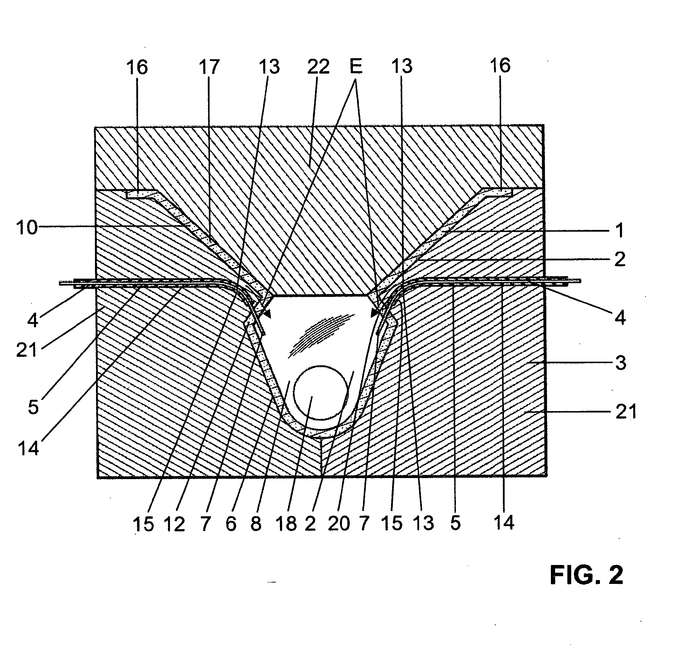

Die Figur 2 zeigt eine Schnittansicht entlang der Linie II-II des Sanitärartikels nach Figur 1 in einer Gussform 3. Die Gussform 3 umfasst dabei einen Gussraum 2, in welchen Schlicker eingefüllt wird und anschliessend zu Keramik aushärtet. Beim Schlicker handelt es sich um eine breiige bis flüssige Masse, welche aus Feststoffen und Wasser besteht, wobei während dem Vorgang des Aushärtens das Wasser aus dem Schlicker gedrängt wird. Typischerweise weist der Schlicker Raumtemperatur bzw. etwa 40° C bis 45° C auf, wenn dieser in die Gussform eingefüllt wird.

Die Gussform 3 weist hier einen Hohlgussabschnitt 8 und einen Vollgussabschnitt 10 auf. Im Hohlgussabschnitt 8 wird hier der Teil der Klosettschüssel geformt, welcher unterhalb des Wulstabschnittes 20 liegt. Dabei wird der Schlicker in die Form gefüllt und über Druckluft an die Innenwand 6 des Hohlgussabschnittes 8 gedrückt. Im Vollgussabschnitt 10 wird der Schlicker mit Druck in den Gussraum 2 eingebracht und füllt dabei den Vollgussabschnitt 10 vollständig aus. Die Gussform 3 umfasst hier zwei Seitenschalen 21 und einen Druckgusstempel 22. Das Einbringen des Schlickers erfolgt unter einem Druck von 10 bar bis 30 bar und der Druck bei der Beaufschlagung durch die Druckluft liegt in einem ähnlichen Bereich.

Weiter umfasst die Gussform 3 mindestens einen Schieber 4. In der vorliegenden Ausführungsform sind eine Vielzahl von Schiebern 4 angeordnet, welche der Bereitstellung der Öffnung 12 im Sanitärartikel 1 dienen. Pro Öffnung 12 ist bevorzugt ein Schieber 4 vorgesehen. Diese Schieber 4 lassen sich von einer Ausgangsposition in den Gussraum 2 einschieben und ragen im eingeschobenen Zustand in den Gussraum 2 ein, wobei dann der Schlicker dem Gussraum 2 zugeführt wird. Bevorzugterweise sind die Schieber 4 flexibel ausgebildet, so dass sich diese auch an schwierig zugängliche Stellen, wie beispielsweise an den Wulstabschnitt 20 zuführen lassen. Dennoch weist der Schieber 4 eine Festigkeit bzw. eine Biegefestigkeit auf, welche verhindert, dass beim Eintritt der Schlickers der Schieber 4 durch den Schlicker zur Innenwand 6 der Gussform 3 gedrückt wird. Folglich liegt der Schieber 4 bezüglich des eintretenden Schlickers formstabil in der Gussform 3. Die Gestalt der Schieber 4 und deren Funktion werden nun in der Folge erläutert.

Zusammenfassend kann also gesagt werden, dass eine Vorrichtung zur Herstellung eines Sanitärartikels aus Keramik eine Gussform 3 mit einem Gussraum 2 und mindestens einen in der Gussform 3 angeordneten Schieber 4 umfasst, welcher entlang einer Einschubrichtung E von einer Ausgangsstellung mindestens teilweise in den Gussraum 2 einschiebbar ist und in Gegenrichtung aus dem Gussraum 2 entfernbar ist, wobei durch den Schieber 4 eine Öffnung 12 oder ein Durchbruch im Sanitärartikel 1 bereitstellbar ist.

Das erfindungsgemässe Verfahren zur Herstellung eines Sanitärartikels 1 umfasst den Schritt des Einbringens von Schlicker in den Gussraum 2 einer Gussform 3, den Schritt des Aushärtens des Schlickers und den Schritt des Trennens der Gussform 3 zur Entnahme des ausgehärteten Sanitärartikels 1 aus der Gussform. Vor dem Schritt des Einbringens des Schlickers wird mindestens ein Schieber 4 von ausserhalb des Gussraums 2 mindestens teilweise in den Gussraum 2 entlang einer Einschubrichtung E eingebracht bzw. eingeschoben. Der Schieber 4 wird dann vor oder während dem Schritt des Trennens der Gussform 3 aus dem Gussraum 2 entgegen der Einschubrichtung E aus dem Gussraum 2 entfernt. Durch den Schieber 4 kann somit eine Öffnung, wie beispielsweise die Öffnung 12 im Wulstabschnitt 20, eine Einbuchtung oder ein Durchbruch bereitgestellt werden.

Beim Schritt des Einbringens des Schlickers wird der Vollgussabschnitt 10 und der Hohlgussabschnitt 8 befüllt. Der Hohlgussabschnitt 8 wird mit Druckluft beaufschlagt, so dass der Schlicker an die Innenwand 6 des Gussraums 3 gepresst wird. Im Vollgussabschnitt 10 wird der Schlicker mit Druck in den Gussraum zwischen Innenwand 6 und Druckgussstempel 22 eingefüllt.

Nach erfolgter Beaufschlagung mit der Druckluft bzw. vor dem Entfernen des Druckgussstempels 22 wird der Schieber 4 aus dem Gussraum 3 entgegen der Einschubrichtung E entfernt.

Der Schieber 4 ist hier entlang eines fest in der Gussform 3 angeordneten und über die Innenwand 6 in den Gussraum 2 mündenden Kanals 5 verschiebbar angeordnet. Der Kanal 5 stellt somit die Führung für den Schieber 4 bereit, wobei pro Schieber 4 je eine Kanal 5 angeordnet ist. Der Kanal 5 umfasst mindestens einen Umlenkabschnitt 13, womit der Schieber 4 in der gewünschten Richtung an der gewünschten Position anordbar bzw. hinführbar ist. Mit dem Umlenkabschnitt 13 können bautechnisch bedingte Hindernisse umgangen werden, wie beispielsweise hier die Form des oberen Abschnittes der Seitenwand 17 zwischen dem Wulstabschnitt 20 und der Sitzfläche bzw. dem Flansch 16. Folglich kann hier der Schieber 4 seitlich zur Seitenwand 17 zugeführt werden und dann vor dem Eintritt in den Gussraum 2 entsprechend umgelenkt werden. Der Umlenkabschnitt 13 lenkt also den Kanal 5 bezüglich der Innenwand 6 derart um, dass der Schieber 4 während seiner Bewegung in den Gussraum 2 umgelenkt wird, womit Öffnungen 12 geformt werden können, welche mit konventionellen Verfahren, wie beispielsweise einem Bohrverfahren nicht herstellbar sind.

Je nach Grad der Umlenkung durch den Umlenkabschnitt 13 ist der Schieber 4 mit einer unterschiedlich grossen Flexibilität versehen. Bei einer Umlenkung mit engen Radien ist es daher vorteilhaft, den Schieber 4 flexibler auszubilden als bei einer Umlenkung mit grösseren Radien. Bezüglich der Flexibilität des Schiebers 4 ist aber weiter noch anzumerken, dass diese nicht zu gross gewählt werden soll, weil ansonsten beim Eintritt des Schlickers der Schieber 4 zur Innenwand 6 der Gussform 3 gedrückt wird. Folglich kann bezüglich der Flexibilität des Schiebers 4 gesagt werden, dass diese so gross sein soll, um den Schieber im Kanal 5 zu bewegen, und dass diese so klein sein soll, um eine Verformung beim Eintritt des Schlickers zu verhindern. Mit anderen Worten: Das in den Gussraum 2 ragende freie Ende 7 des Schiebers 4 muss eine derartige Steifigkeit aufweisen, dass der Schieber 4 beim Einbringen des Schlickers seine Lage aufrechterhält.

Der Querschnitt des Schiebers 4 entspricht dem Querschnitt der herzustellenden Öffnung 12. Der in den Figuren gezeigte Schieber 4 weist einen kreisrunden Querschnitt auf, womit Öffnungen 12 mit ebenfalls rundem Querschnitt herstellbar sind. Andere Querschnitte, wie eckige, polygonale, elliptische etc., sind ebenfalls denkbar. Ein solcher Schieber 4 weist vorteilhaft einen Durchmesser im Bereich von 1 mm bis 5 mm oder gar 10 mm auf, wobei grössere oder auch kleinere Schieber auch denkbar sind.

Der Schieber 4 ist vorzugsweise aus einem Kunststoff, insbesondere aus einem Polyamid, wie Nylon. Mit einem Nylonfaden oder Nylondraht mit einem Durchmesser von 2.5 mm wurden gute Ergebnisse erzielt. Alternativ kann der Schieber auch aus einem metallischen Werkstoff sein.

Vorzugsweise ist der Schieber 4 einstückig ausgebildet. In einer alternativen Ausführungsform besteht der Schieber 4 aus mindestens zwei Teilen, nämlich aus einer das freie Ende 7 bildende Spitze und einem Schaft. Die Spitze ist dabei aus einem Material, das eine grössere Steifigkeit als der Schaft aufweist. Der Schaft, welcher durch den Umlenkabschnitt 13 geführt wird, ist dann aus einem flexiblen Material, während die Spitze aus einem steiferen Material ist. Somit kann dem Umstand Rechnung getragen werden, dass der Schieber aufgrund der Umlenkung eine grosse Flexibilität aufweisen soll, während der Schieberabschnitt bzw. das freie Ende 7, der/das in den Gussraum 2 einragt, eine möglichst hohe Steifigkeit aufweisen soll.

Der Umlenkabschnitt 13 ist hier bogenförmig als Bogenabschnitt ausgebildet, wobei der Bogenabschnitt 13 über einen Zuführabschnitt 14, der hier winklig zur Innenwand 6 verläuft, in Verbindung steht. Am anderen Ende steht der Bogenabschnitt 13 mit einem Endabschnitt 15 in Verbindung, wobei der Endabschnitt 15 direkt oder indirekt in den Gussraum 2 mündet.

In der vorliegenden Ausführungsform mündet der Kanal 5 im Wesentlichen mit einer vorbestimmten Richtung, hier parallel zur Innenwand 6 des Gussraums 2 in den Gussraum 2. Der Schieber 4 liegt somit im in den Gussraum 2 einragenden Zustand über sein freies Ende 7 parallel zur Innenwand 6. Somit kann eine Öffnung 12 bereitgestellt werden, welche die gewünscht Richtung aufweist.

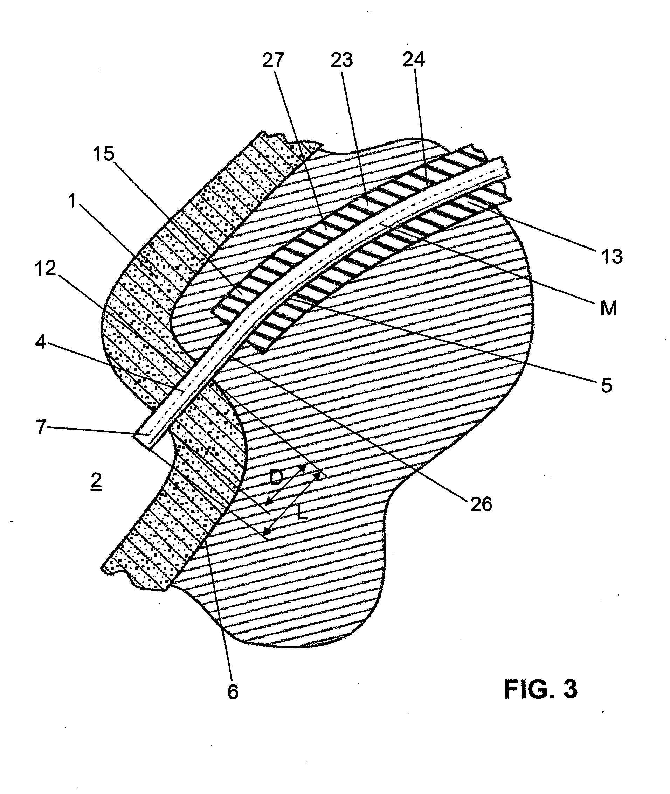

Wie in den Figuren 2 und 3 gut erkannt werden kann, ragt der Schieber 4 mit seinem freien Ende 7 hier in den Hohlgussabschnitt 8 der Gussform 3. Wenn die Öffnung 12 einen Durchbruch im Sanitärartikel 1 bereitstellen soll, so weist das freie Ende 7 eine Länge L von der Innenwand 6 des Gussraums 3 auf, welcher grösser ist als die Dicke des Sanitärartikels 1 im entsprechenden Bereich, wo die Öffnung 12 zu liegen kommen soll.

Sofern nur eine Einbuchtung geformt werden soll, ist die Länge L kürzer zu wählen.

Alternativ kann der Schieber 4 aber auch im Vollgussabschnitt 10 angeordnet sein, wobei sich der Schieber 4 hier von der Innenwand 6 bis hin zum oder in den Druckgussstempel 22 erstreckt, wenn die Öffnung 12 ein Durchbruch sein soll. Bezüglich einer Einbuchtung gilt das oben gesagte in analoger Weise.

In der Figur 3 kann weiterhin die vorzugsweise Ausbildung des Kanals 5 erkannt werden. Vorzugsweise weist der Kanal 5 die Gestalt eines in der Gussform 3 eingelassenen Rohres 23 auf. Das Rohr 23 umfasst dabei eine um eine Mittelachse M umlaufende Seitenwand 27, welche einen Innenraum 24 begrenzt. Im Innenraum 24 ist der Schieber 4 bezüglich des Rohrs 23 bewegbar, so dass der Schieber 4 entlang der Einschubrichtung E bzw. gegen die Einschubrichtung E bewegbar ist. Das Rohr 23 ist abschnittsweise gebogen bzw. gekrümmt ausgebildet, so dass der Umlenkabschnitt 13 bereitgestellt werden kann.

Die Stirnseite 25 des Rohres ist bezüglich der Innenwand 6 des Gussraums 2 versetzt angeordnet, wobei sich der Stirnseite 25 ein Durchgang 26 anschliesst, welcher in der Gussform 3 angeordnet ist und sich von der Stirnseite 25 bis zur Innenwand 6 erstreckt. Über den Durchgang 26 wird der Schieber 4 dann dem Gussraum 2 zugeführt. Diese Ausbildung hat den Vorteil, dass die Innenwand 6 des Gussraumes 2 nicht unnötig unterbrochen wird, was zu einem vorteilhaften Guss mit einer glatten Oberfläche führt. Weiter wäre es auch denkbar, dass die Durchgänge 26 in einem um den Gussraum 2 umlaufenden Führungsring angeordnet sind.

Alternativ kann die Stirnseite 25 auch bündig mit der Innenwand 6 angeordnet sein, wobei dann die Stirnseite 25 einen Teil der Innenwand 6 bildet. Diese Ausführungsform wird vorzugsweise dann eingesetzt, wenn bezüglich Oberflächenbeschaffenheit geringere Anforderungen gestellt werden.

In diesem Zusammenhang ist anzumerken, dass die Orientierung des Durchganges 26 bzw. des Rohrs 23 den Winkel der Bohrung im Sanitärartikel 1 beeinflusst, weil der Schieber 4 entlang dieser Richtung in den Gussraum 2 einragt. Daher ergibt sich auch der Vorteil, dass jedes Rohrs 23 bzw. jeder Durchgang 26 einzelnen und individuell in die benötigte Richtung eingestellt werden können.

Das Rohr 23 kann aus Kunststoff, Metall oder einer Kombination aus Kunststoff und Metall sein.

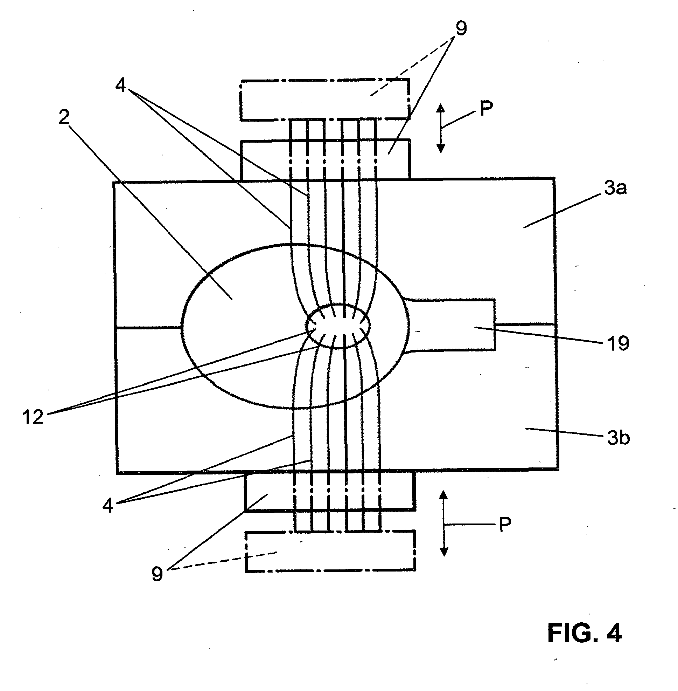

In der Figur 4 wird gezeigt, dass erfindungsgemäß mehrere Schieber 4 miteinander über ein Aktuatorelement 9 in Verbindung stehen. Das Aktuatorelement 9 kann somit mehrere Schieber 4 gemeinsam betätigen und ist von einer Ruhestellung 9, hier strichpunktiert dargestellt, in eine Gussstellung, hier mit ausgezogenen Linien dargestellt, entlang des Pfeils P bewegbar. In der letzteren ragen die Schieber 4 im Gussraum 2 ein. Hier sind zwei Akuatorelemente 9 vorgesehen, welche jeweils einer Gussseite 3a, 3b der Gussform 3 zugeordnet sind.

Unabhängig von der Anordnung des Aktuatorelementes 9 sei hier angemerkt, dass alle Schieber 4 vorzugsweise miteinander gleichzeitig bewegt werden.

Zusammenfassend sei hier erwähnt, dass ein Schieber 4 gemäss der vorliegenden Erfindung den Vorteil aufweist, dass aufgrund der flexiblen Ausbildung des Schiebers 4 an einer schwer zugänglichen Stelle an einem keramischen Sanitärartikel in einer einfachen Art und Weise eine Öffnung geschaffen werden kann.

### BEZUGSZEICHENLISTE

- 1: Sanitärartikel, Klosettschüssel
- 2: Gussraum
- 3: Gussform
- 4: Schieber
- 5: Kanal
- 6: Innenwand
- 7: freies Ende
- 8: Hohlgussabschnitt
- 9: Aktuatorelement
- 10: Vollgussabschnitt
- 11: Stab
- 12: Öffnung im Sanitärartikel
- 13: Umlenkabschnitt
- 14: Zuführabschnitt
- 15: Endabschnitt
- 16: Sitzfläche/Flansch
- 17: Seitenwand
- 18: Siphonabschnitt
- 19: Anschlussrohr
- 20: Wulstabschnitt
- 21: Seitenschalen
- 22: Druckgussstempel
- 23: Rohr
- 24: Innenraum
- 25: Stirnseite
- 26: Durchgang
- 27: Seitenwand von Rohr

## Patentansprüche

1. Verfahren zur Herstellung eines Sanitärartikels (1), wie einer Klosettschüssel, wobei das Verfahren den Schritt des Einbringens von Schlicker in den Gussraum (2) einer Gussform (3), den Schritt des Aushärtens des Schlickers in der Gussform (3) und den Schritt des Trennens der Gussform zur Entnahme des ausgehärteten Sanitärartikels (1) aus der Gussform (3) umfasst, wobei vor dem Schritt des Einbringens des Schlickers mindestens ein Schieber (4) von ausserhalb des Gussraums (2) mindestens teilweise in den Gussraum (2) entlang einer Einschubrichtung (E) eingebracht wird, wobei der Schieber (4) vor oder während dem Schritt des Trennens der Gussform (3) aus dem Gussraum (2) entgegen der Einschubrichtung (E) entfernt wird, wobei durch den Schieber (4) eine Öffnung (12), eine Einbuchtung oder ein Durchbruch im Sanitärartikel (1) bereitstellbar ist, **dadurch gekennzeichnet, dass** mehrere Schieber (4) über ein Aktuatorelement (9) miteinander in Verbindung stehen und über das Aktuatorelement (9) gemeinsam betätigt werden können.

2. Verfahren nach Anspruch 1, **dadurch gekennzeichnet, dass** der Schieber (4) entlang eines fest in der Gussform (3) angeordneten und über eine Innenwand (6) in den Gussraum (2) mündenden Kanals (5) verschoben wird, wobei der Kanal (5) mindestens einen Umlenkabschnitt (13) umfasst, welcher den Kanal (5) bezüglich der Innenwand (6) umlenkt, wobei der Schieber flexibel ausgebildet ist, so dass der Schieber (4) während der Bewegung umgelenkt wird.

3. Verfahren nach Anspruch 2, **dadurch gekennzeichnet, dass** der Umlenkabschnitt (13) bogenförmig als Bogenabschnitt ausgebildet ist, wobei der Bogenabschnitt (13) über einen Zuführabschnitt (14), der bevorzugt winklig zur Innenwand (6) verläuft, in Verbindung steht, und wobei der Bogenabschnitt (13) gegenüber des Zuführabschnittes (14) mit einem Endabschnitt (15), welcher direkt oder indirekt in den Gussraum (2) mündet, in Verbindung steht.

4. Verfahren nach einem der vorhergehenden Ansprüche, **dadurch gekennzeichnet, dass** der Kanal (5) in einer vorbestimmten Richtung, bevorzugt im wesentlichen parallel, zur Innenwand (6) des Gussraums (2) in den Gussraum (2) mündet, so dass der Schieber (4) im in den Gussraum (2) einragenden Zustand über sein freies Ende (7) parallel zur Innenwand (6) in der Gussform liegt.

5. Verfahren nach einem der vorhergehenden Ansprüche, **dadurch gekennzeichnet, dass** der Schieber (4) mit einem freien Ende (7) in den Gussraum (2), insbesondere in einen Hohlgussabschnitt (8), einragt, und dass das freie Ende (7) vorzugsweise eine Länge (L) von der Innenwand (6) des Gussraums (2) aufweist, welche grösser ist, als die Dicke (D) des Sanitärartikels (1) in dem Bereich.

6. Verfahren nach einem der vorhergehenden Ansprüche, **dadurch gekennzeichnet, dass** beim Schritt des Einbringens des Schlickers ein Vollgussabschnitt (10) und ein Hohlgussabschnitt (8) befüllt wird, wobei der Hohlgussabschnitt (8) mit Druckluft beaufschlagt wird, so dass der Schlicker an die Innenwand (6) des Gussraums (2) gepresst wird, wobei der Schieber (4) nach erfolgter Beaufschlagung aus dem Gussraum (2) entgegen der Einschubrichtung (E) entfernt wird.

7. Vorrichtung zur Durchführung des Verfahrens nach einem der Ansprüche 1 bis 6, wobei die Vorrichtung eine Gussform (3) mit einem Gussraum (2) umfasst, wobei die Vorrichtung weiter mindestens einen Schieber (4) umfasst, welcher entlang einer Einschubrichtung (E) von ausserhalb des Gussraums (2) mindestens teilweise in den Gussraum (2) einschiebbar ist und vor dem Schritt des Trennens der Gussform (3) aus der Gussform (3) entgegen der Einschubrichtung (E) aus dem Gussraum (3) entfernbar ist, wobei durch den Schieber (4) eine Öffnung (12), eine Einbuchtung oder ein Durchbruch im Sanitärartikel (1) bereitstellbar ist, **dadurch gekennzeichnet, dass** mehrere Schieber (4) über ein Aktuatorelement (9) miteinander in Verbindung stehen und über das Aktuatorelement (9) gemeinsam betätigt werden können.

8. Vorrichtung nach Anspruch 7, **dadurch gekennzeichnet, dass** der Schieber (4) entlang eines fest in der Gussform (3) angeordneten und über eine Innenwand (6) in den Gussraum (2) mündenden Kanals (5) verschiebbar ist, wobei der Kanal (5) mindestens einen Umlenkabschnitt (13) umfasst, welcher den Kanal (5) bezüglich der Innenwand (6) umlenkt, so dass der Schieber (4) während der Bewegung umgelenkt wird.

9. Vorrichtung nach Anspruch 8, **dadurch gekennzeichnet, dass** der Umlenkabschnitt (13) bogenförmig als Bogenabschnitt ausgebildet ist, wobei der Bogenabschnitt (13) über einen Zuführabschnitt (14), der bevorzugt winklig zur Innenwand (6) verläuft, in Verbindung steht und wobei der Bogenabschnitt (13) gegenüber des Zuführabschnittes (14) mit einem Endabschnitt (15), welcher direkt oder indirekt in den Gussraum (2) mündet, in Verbindung steht.

10. Vorrichtung nach einem der Ansprüche 7 bis 9, **dadurch gekennzeichnet, dass** der Kanal (5) in einer vorbestimmten Richtung, vorzugsweise im wesentlichen parallel, zur Innenwand (6) des Gussraums (2) in den Gussraum (2) mündet, so dass der Schieber (4) im in den Gussraum (2) einragenden Zustand über sein freies Ende (7) parallel zur Innenwand (6) in der Gussform liegt.

11. Vorrichtung nach einem der Ansprüche 7 bis 10, **dadurch gekennzeichnet, dass** mindestens das freie Ende (7) des Schieber (4), welches in den Gussraum (2) einragt, eine derartige Steifigkeit aufweist, dass der Schieber (4) beim Einbringen des Schlickers seine Lage aufrechterhält, und dass der Schieber (4) eine Flexibilität aufweist, welche das Bewegen des Schiebers (4) durch den Umlenkabschnitt (13) erlaubt, wobei der Schieber vorzugsweise aus Kunststoff, insbesondere Nylon, und/oder Metall ist.

12. Vorrichtung nach einem der Ansprüche 7 bis 11, **dadurch gekennzeichnet, dass** der Schieber (4) mit einem freien Ende (7) in den Gussraum (2), insbesondere in einen Hohlgussabschnitt (8), einragt, und dass das freie Ende (7) vorzugsweise eine Länge (L) von der Innenwand (6) des Gussraums (2) aufweist, welche grösser ist, als die Dicke (D) des Sanitärartikels (1) in dem Bereich.

13. Vorrichtung nach einem der Ansprüche 7 bis 12, **dadurch gekennzeichnet, dass** die Gussform (3) einen Vollgussabschnitt (10) und einen Hohlgussabschnitt (8) aufweist, wobei der Schieber (4) vorzugsweise im Hohlgussabschnitt (8) angeordnet ist.

14. Vorrichtung nach einem der Ansprüche 7 bis 13, **dadurch gekennzeichnet, dass** der Kanal (5) die Gestalt eines in der Gussform (3) eingelassenen Rohres (23) aufweist, wobei im Innenraum (24) des Rohres (23) der Schieber (4) bewegbar ist, und wobei das Rohr (23) abschnittsweise gebogen bzw. gekrümmt ausgebildet ist, wobei die Stirnseite (25) des Rohres (23) bündig mit der Innenwand (6) des Gussraums (2) ist, oder wobei die Stirnseite (25) des Rohres (23) von der Innenwand (6) des Gussraums versetzt angeordnet ist, wobei sich der der Kanal (5) aus dem Rohr (23) und einem sich dem Rohr (23) anschliessenden Durchgang (26), welcher Teil der Gussform (3) ist, zusammensetzt.

15. Verwendung einer Vorrichtung nach einem der Anspruch 7 bis 14 zur Herstellung einer Klosettschüssel (1) mit einem Flansch (16), einer sich dem Flansch (16) anschliessenden umlaufend ausgebildeten Seitenwand (17) und einem sich der Seitenwand (17) anschliessenden Anschlussrohr (19) mit einem Siphonabschnitt (18), aufweist, wobei die Klosettschüssel (1) im Bereich der Seitenwand (17) eine Vielzahl von Öffnungen (12) aufweist, welche durch den Schieber (4) bereitstellbar sind.

## Claims

1. Method for producing a sanitary article (1), such as a toilet bowl, wherein the method comprises the step of introducing liquid clay into the casting chamber (2) of a casting mould (3), the step of hardening the liquid clay in the casting mould (3) and the step of separating the casting mould for removing the hardened sanitary article (1) out of the casting mould (3), wherein prior to the step of introducing the liquid clay, at least one slide (4) is introduced from outside the casting chamber (2) along an insertion direction (E) at least partially into the casting chamber (2), wherein the slide (4) is removed out of the casting chamber (2) in opposition to the insertion direction (E) prior to or during the step of separating the casting mould (3), wherein an opening (12), an indentation or a break-through can be provided in the sanitary article (1) by means of the slide (4), **characterized in that** several slides (4) are connected together by means of one actuator element (9) and can be actuated together by means of the actuator element (9).

2. Method according to Claim 1, **characterized in that** the slide (4) is displaced along a channel (5), which is arranged fixedly in the casting mould (3) and opens out into the casting chamber (2) via an inner wall (6), wherein the channel (5) comprises at least one deflection section (13) which deflects the channel (5) with reference to the inner wall (6), wherein the slide is realized in a flexible manner such that the slide (4) is deflected during the movement.

3. Method according to Claim 2, **characterized in that** the deflection section (13) is realized in a curved manner as a curved section, wherein the curved section (13) is connected by means of a supply section (14) which preferably extends at an angle with respect to the inner wall (6), and wherein the curved section (13), compared to the supply section (14), is connected to an end section (15) which opens out directly or indirectly into the casting chamber (2).

4. Method according to one of the preceding claims, **characterized in that** the channel (5) opens out into the casting chamber (2) in a predetermined direction, preferably substantially parallel, with respect to the inner wall (6) of the casting chamber (2) such that, in the state projecting into the casting chamber (2), the slide (4) lies in the casting mould parallel to the inner wall (6) by way of its free end (7).

5. Method according to one of the preceding claims, **characterized in that** the slide (4) projects into the casting chamber (2), in particular into a hollow casting section (8), by way of a free end (7) and **in that** the length (L) of the free end (7) along the inner wall (6) of the casting chamber (2) is preferably greater than the thickness (D) of the sanitary article (1) in the region.

6. Method according to one of the preceding claims, **characterized in that** during the step of introducing the liquid clay a solid casting section (10) and a hollow casting section (8) are filled, wherein the hollow casting section (8) is acted upon with compressed air such that the liquid clay is pressed onto the inner wall (6) of the casting chamber (2), wherein once said action with compressed air has been successful, the slide (4) is removed in opposition to the insertion direction (E) out of the casting chamber (2).

7. Device for carrying out the method according to one of claims 1 to 6, wherein the device comprises a casting mould (3) with a casting chamber (2), wherein the device further comprises at least one slide (4) which can be pushed at least partially into the casting chamber (2) from outside the casting chamber (2) along an insertion direction (E) and prior to the step of separating the casting mould (3) can be removed out of the casting mould (3) in opposition to the insertion direction (E) out of the casting chamber (2), wherein an opening (12), an indention or a break-through can be provided in the sanitary article (1) by means of the slide (4) **characterized in that** several slides (4) are connected together by means of one actuator element (9) and can be actuated together by means of the actuator element (9).

8. Device according to Claim 7, **characterized in that** the slide (4) is displaceable along a channel (5) which is arranged fixedly in the casting mould (3) and opens out into the casting chamber (2) by means of an inner wall (6), wherein the channel (5) comprises at least one deflection section (13) which deflects the channel (5) with reference to the inner wall (6) such that the slide (4) is deflected during the movement.

9. Device according to Claim 8, **characterized in that** the deflection section (13) is realized in a curved manner as a curved section, wherein the curved section (13) is connected by means of a supply section (14) which preferably extends at an angle with respect to the inner wall (6), and wherein the curved section (13), compared to the supply section (14), is connected to an end section (15) which opens out directly or indirectly into the casting chamber (2).

10. Device according to one of claims 7 to 9, **characterized in that** the channel (5) opens out into the casting chamber (2) in a predetermined direction, preferably substantially parallel, with respect to the inner wall (6) of the casting chamber (2) such that, in the state projecting into the casting chamber (2), the slide (4) lies in the casting mould parallel to the inner wall (6) by way of its free end (7).

11. Device according to one of claims 7 to 10, **characterized in that** at least the free end (7) of the slide (4), which projects into the casting chamber (2), has a rigidity of such a type that the slide (4) maintains its position when the liquid clay is introduced, and **in that** the slide (4) has a flexibility which allows for the movement of the slide (4) through the deflection section (13), wherein the slide (4) is preferably of plastics material, in particular nylon and/or metal.

12. Device according to one of claims 7 to 11, **characterized in that** the slide (4) projects into the casting chamber (2), in particular into a hollow casting section (8), by way of a free end (7) and **in that** the length (L) of the free end (7) along the inner wall (6) of the casting chamber (2) is preferably greater than the thickness (D) of the sanitary article (1) in the region.

13. Device according to one of claims 7 to 12, **characterized in that** the casting mould (3) has a solid casting section (10) and a hollow casting section (8), wherein the slide (4) is preferably arranged in the hollow casting section (8).

14. Device according to one of claims 7 to 13, **characterized in that** the channel (5) is in the form of a pipe (23) recessed in the casting mould (3), wherein the slide (4) is movable in the interior (24) of the pipe (23), and wherein the pipe (23) is realized in sections in a bent or curved manner, wherein the end face (25) of the pipe (23) is flush with the inner wall (6) of the casting chamber (2), or wherein the end face (25) of the pipe (23) is arranged offset from the inner wall (6) of the casting chamber, wherein the channel (5) is assembled from the pipe (23) and a passage (26), which connects to the pipe (23) and is part of the casting mould (3).

15. Use of a device according to one of claims 7 to 15 to produce a toilet bowl (1) having a flange (16), a side wall (17) which is realized in a circumferential manner connecting to the flange (16) and a connecting pipe (19) which connects to the side wall (17) and has a U-bend section (18), wherein, in the region of the side wall (17), the toilet bowl (1) has a plurality of openings (12) which can be provided by means of the slide (4).

## Revendications

1. Procédé de fabrication d'un article sanitaire (1), par exemple une cuvette de toilette, le procédé comportant
une étape qui consiste à apporter une barbotine dans l'espace de coulée (2) d'un moule de coulée (3),
une étape de durcissement de la barbotine dans le moule de coulée (3) et
une étape de séparation du moule de coulée en vue d'enlever l'article sanitaire (1) durci hors du moule de coulée (3),
dans lequel avant l'étape d'amenée de la barbotine, au moins un poussoir (4) est amené au moins en partie dans l'espace de coulée (2) dans une direction d'insertion (E) depuis l'extérieur de l'espace de coulée (2),
le poussoir (4) étant retiré hors de l'espace de coulée (2) en direction opposée à la direction d'insertion (E) avant ou pendant l'étape de séparation du moule de coulée (3),
une ouverture (12), un creux ou une perforation ménagée dans l'article sanitaire (1) pouvant être réalisés par le poussoir (4),
**caractérisé en ce que**
plusieurs poussoirs (4) sont raccordés les uns aux autres par l'intermédiaire d'un élément d'actionnement (9) et peuvent être actionnés conjointement par l'élément d'actionnement (9).

2. Procédé selon la revendication 1, **caractérisé en ce que** le poussoir (4) est déplacé dans un canal (5) disposé fixement dans le moule de coulée (3) et débouchant dans l'espace de coulée (2) par une paroi intérieure (6), le canal (5) présentant au moins une partie en déviation (13) qui dévie le canal (5) par rapport à la paroi intérieure (6) et le poussoir étant flexible de telle sorte que le poussoir (4) soit dévié pendant son déplacement.

3. Procédé selon la revendication 2, **caractérisé en ce que** la partie en déviation (13) a la forme d'un arc de cercle, l'arc de cercle (13) étant raccordé par l'intermédiaire d'une partie d'amenée (14) qui s'étend de préférence obliquement par rapport à la paroi intérieure (6) et l'arc de cercle (13) étant raccordé à une partie terminale (15) qui débouche directement ou indirectement dans l'espace de coulée (2) par rapport à la partie d'amenée (14).

4. Procédé selon l'une des revendications précédentes, **caractérisé en ce que** le canal (5) débouche dans l'espace de coulée (2) dans une direction prédéterminée qui est de préférence essentiellement parallèle à la paroi intérieure (6) de l'espace de coulée (2), de telle sorte qu'après avoir pénétré dans l'espace de coulée (2), le poussoir (4) soit situé dans le moule de coulée parallèlement à la paroi intérieure (6) par l'intermédiaire de son extrémité libre (7).

5. Procédé selon l'une des revendications précédentes, **caractérisé en ce que** le poussoir (4) pénètre par son extrémité libre (7) dans l'espace de coulée (2), en particulier dans une partie (8) de coulée creuse, et **en ce que** l'extrémité libre (7) présente par rapport à la paroi intérieure (6) de l'espace de coulée (2) une longueur (L) de préférence plus grande que l'épaisseur (D) de l'article sanitaire (1) dans cette partie.

6. Procédé selon l'une des revendications précédentes, **caractérisé en ce que** lors de l'étape d'amenée de la barbotine, une partie (10) de coulée pleine et une partie (8) de coulée creuse sont remplies, de l'air comprimé étant appliqué sur la partie (8) de coulée creuse de telle sorte que la barbotine soit refoulée contre la paroi intérieure (6) de l'espace de coulée (2), le poussoir (4) étant enlevé de l'espace de coulée (2) dans la direction opposée à la direction d'insertion (E) après cette application.

7. Dispositif en vue de la mise en oeuvre du procédé selon l'une des revendications 1 à 6, le dispositif comportant
un moule de coulée (3) doté d'un espace de coulée (2),
le dispositif comportant en outre au moins un poussoir (4) qui peut être inséré dans une direction d'insertion (E) au moins partiellement dans l'espace de coulée (2) depuis l'extérieur de l'espace de coulée (2) et pouvant être retiré du moule de coulée (3) dans la direction opposée à la direction d'insertion (E) avant l'étape de séparation du moule de coulée (3),
le poussoir (4) permettant de réaliser dans l'article sanitaire (1) une ouverture (12), un creux ou une perforation,
**caractérisé en ce que**
plusieurs poussoirs (4) sont raccordés les uns aux autres par l'intermédiaire d'un élément d'actionnement (9) et peuvent être actionnés conjointement par l'intermédiaire de l'élément d'actionnement (9).

8. Dispositif selon la revendication 7, **caractérisé en ce que** le poussoir (4) peut coulisser le long d'un canal (5) disposé fixement dans le moule de coulée (3) et débouchant dans l'espace de coulée (2) par l'intermédiaire d'une paroi intérieure (6), le canal (5) comportant au moins une partie en déviation (13) qui dévie le canal (5) par rapport à la paroi intérieure (6) de telle sorte que le poussoir (4) soit dévié pendant son déplacement.

9. Dispositif selon la revendication 8, caractérisé la partie en déviation (13) a la forme d'un arc de cercle, l'arc de cercle (13) étant raccordé par l'intermédiaire d'une partie d'amenée (14) qui s'étend de préférence obliquement par rapport à la paroi intérieure (6) et l'arc de cercle (13) étant raccordé à une partie terminale (15) qui débouche directement ou indirectement dans l'espace de coulée (2) par rapport à la partie d'amenée (14).

10. Dispositif selon l'une des revendications 7 à 9, **caractérisé en ce que** le canal (5) débouche dans l'espace de coulée (2) dans une direction prédéterminée qui est de préférence essentiellement parallèle à la paroi intérieure (6) de l'espace de coulée (2), de telle sorte qu'après avoir pénétré dans l'espace de coulée (2), le poussoir (4) soit situé dans le moule de coulée parallèlement à la paroi intérieure (6) par l'intermédiaire de son extrémité libre (7).

11. Dispositif selon l'une des revendications 7 à 10, **caractérisé en ce qu'**au moins l'extrémité libre (7) du poussoir (4) qui pénètre dans l'espace de coulée (2) présente une rigidité telle que lors de l'amenée de la barbotine, le poussoir (4) conserve sa position et **en ce que** le poussoir (4) présente une flexibilité qui permet le déplacement du poussoir (4) dans la partie en déviation (13), le poussoir étant réalisé de préférence en matière synthétique et notamment le nylon et/ou en métal.

12. Dispositif selon l'une des revendications 7 à 11, **caractérisé en ce que** le poussoir (4) pénètre par son extrémité libre (7) dans l'espace de coulée (2), en particulier dans une partie (8) de coulée creuse, et **en ce que** l'extrémité libre (7) présente par rapport à la paroi intérieure (6) de l'espace de coulée (2) une longueur (L) de préférence plus grande que l'épaisseur (D) de l'article sanitaire (1) dans cette partie.

13. Dispositif selon l'une des revendications 7 à 12, **caractérisé en ce que** le moule de coulée (3) présente une partie (10) de coulée pleine et une partie (8) de coulée creuse, le poussoir (4) étant disposé de préférence dans la partie (8) de coulée creuse.

14. Dispositif selon l'une des revendications 7 à 13, **caractérisé en ce que** le canal (5) présente la forme d'un tube (23) ménagé dans le moule de coulée (3), le poussoir (4) pouvant se déplacer dans l'espace intérieur (24) du tube (23), le tube (23) présentant des parties cintrées ou courbées, le côté frontal (25) du tube (23) étant à chant par rapport à la paroi intérieure (6) de l'espace de coulée (2), ou le côté frontal (25) du tube (23) étant décalé par rapport à la paroi intérieure (6) de l'espace de coulée, le canal (5) étant constitué de l'assemblage du tube (23) et d'un passage (26) qui se raccorde au tube (23) et qui fait partie du moule de coulée (3).

15. Utilisation d'un dispositif selon l'une des revendications 7 à 14 en vue de la fabrication d'une cuvette de toilette (1) dotée d'une bride (16), d'une paroi latérale (17) qui se raccorde à la bride (16) et l'entoure et d'un tube de raccordement (19) qui se raccorde à la paroi latérale (17) et doté d'une partie (18) formant siphon, la cuvette de toilette (1) présentant au niveau de la paroi latérale (17) plusieurs ouvertures (12) qui peuvent être réalisées par le poussoir (4).
